# EUROPEAN PATENT SPECIFICATION

(11) **EP 0 877 371 B1**
(45) Date of publication and mention of the grant of the patent: **03.09.2003**
(21) Application number: 98303513.0
(22) Date of filing: 05.05.1998
(51) Int. Cl.: G11B 20/10, G11B 20/00, H04H 5/00

(54) **Recording and playback of multi-channel digital audio having channels of different sampling rates**
Aufzeichnung und Wiedergabe digitaler Mehrkanal-Audiosignale unterschiedlicher Abtastraten
Enregistrement et reproduction de signaux audio numérique à canaux multiples et à taux d'échantillonnage différents

(30) Priority: 05.05.1997 US 45878 P; 24.04.1998 US 66043
(43) Date of publication of application: 11.11.1998
(73) Proprietor: Warner Music Group, Inc., New York, NY 10019 (US)
(72) Inventor: Lydecker, George, Burbank, California 91505 (US); Thagard, Gregory, Encino, California 91316 (US); McPherson, Alan, Burbank, California 91504 (US); Mecca, Charles M.J., Jessup, Pennsylvania 18434 (US); Outwater, Edward III, Santa Monica, California 90402 (US)
(74) Representative: Jones, Colin

(56) References cited:
- EP-A- 0 381 807
- EP-A- 0 734 019
- WO-A-95/21491
- US-A- 5 539 716
- US-A- 5 570 308
- US-A- 5 638 451
- PATENT ABSTRACTS OF JAPAN vol. 018, no. 587 (P-1824), 10 November 1994 & JP 06 215483 A (SONY CORP), 5 August 1994
- "Compact Disc mit gemultiplexten Informationskanälen" NEUES AUS DER TECHNIK, no. 1, 20 February 1987, pages 1-2, XP002075505 Würzburg, Germany

## Description

### Background of the Invention

This invention relates to recording and playback of multi-channel digital audio having different sampling rates for different channels.

Technology of the type used for software carriers such as the Digital Versatile Disc ("DVD") makes it economically viable to provide recording media containing greatly enhanced audio information. For example, as described in EP-A-0 381 807, a single disc may contain multi-lingual versions of a program. In another example, it is possible to provide digital audio recordings on software carriers having six channels of digital audio to be played by six-channel audio systems. The typical six-channel audio system has a front left channel, a front center channel, a front right channel, a rear left channel, a rear right channel, and a subwoofer (low frequency effect, "LFE") channel. One illustration of a multi-channel acoustic system that involves at least six audio channels is provided in EP-A-0 734 019.

It is known that increased sampling rates provide better audio reproduction. However, sampling all channels of multi-channel audio at very high rates may produce more data and take up more space on the software carrier than is necessary to produce better reproduction. (Depending on the application, compression may be used to expand the effective data storage capacity of digital recording media, as discussed, for example, in WO-A- 95/21491 and U.S. Patent No. 5,539,716.)

In addition, many potential purchasers of audio software carriers may have only two-channel stereophonic audio systems, and it may be wasteful of space on the software carrier to record the same audio programming in both six-channel and two-channel versions, especially when higher sampling rates are to be used to enhance audio reproduction quality. (For one example of a system wherein data that had been recorded in different formats may be processed and mixed using a single digital filter circuit, see U.S. Patent No. 5,570,308.)

In view of the foregoing, it is an object of this invention to provide a method and device respectively for playing back multi-channel digital audio having different sampling rates for different channels in order to avoid recording more data than is necessary and consequently to conserve space on the software carrier.

It is another object of this invention to provide a method and device for deriving from audio information recorded and played back in one format audio signals in a different format so that both formats do not have to be recorded on the software carrier.

### Summary of the Invention

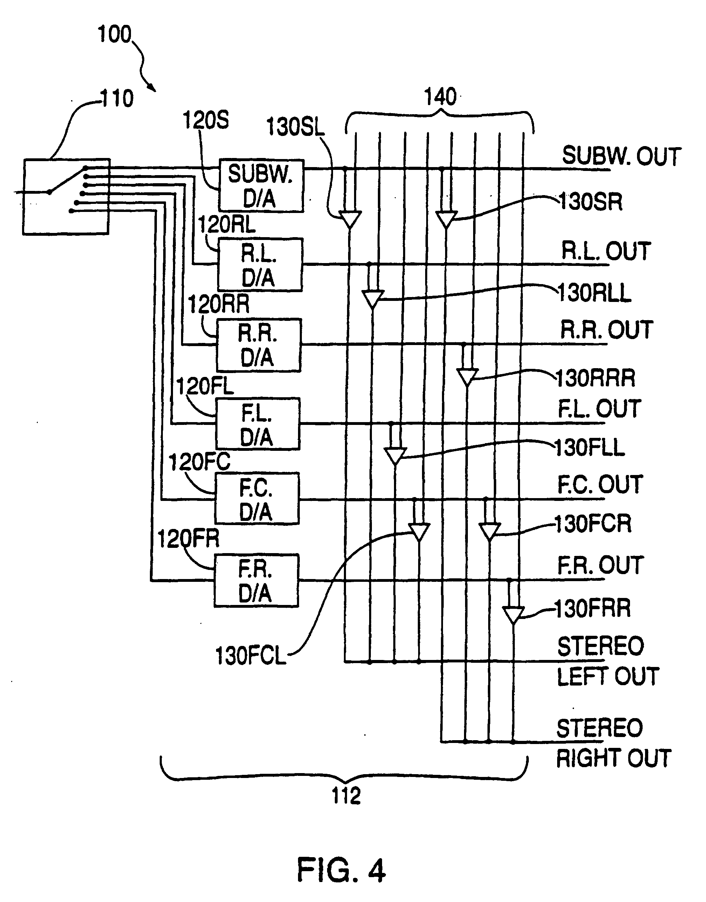

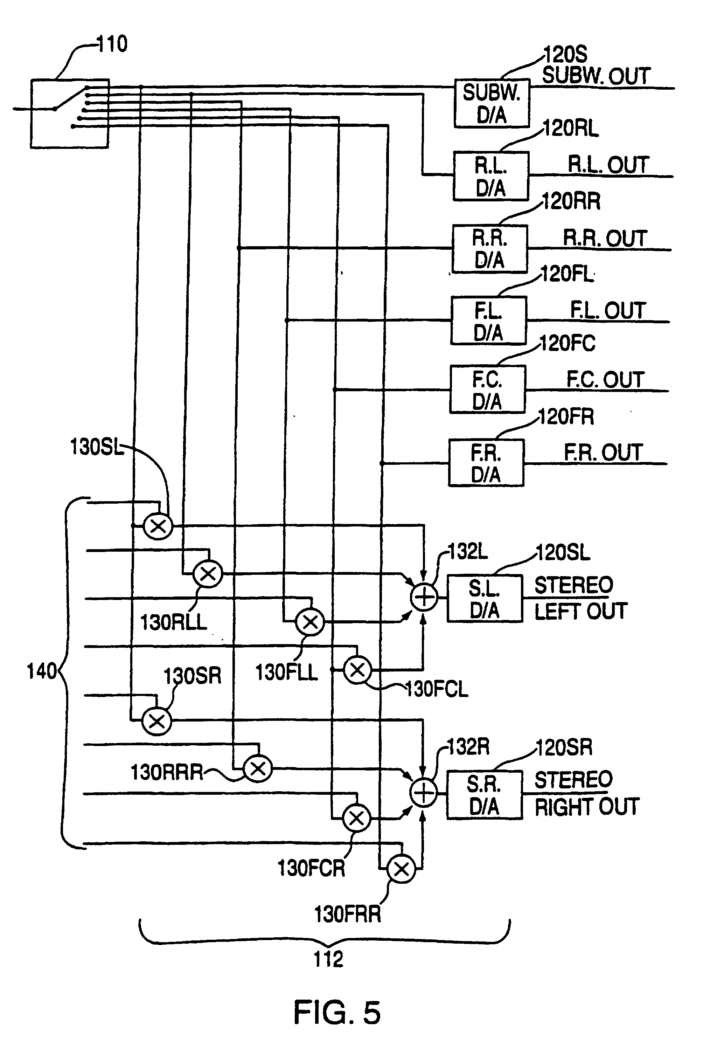

In accordance with one aspect of the present invention, there is provided a device for playing back recorded multi-channel digital audio signal samples, comprising a demultiplexer (110) configured to demultiplex digital audio signal samples associated with a plurality of channels of audio data read by the device from a software carrier (20) onto a respective plurality of digital output channels, a first plurality of digital-to-analogue converters (FIGS. 4 and 5: 120S, 120RL, 120RR, 120FL, 120FC, 120FR) coupled to respective output channels of the demultiplexer, wherein each digital-to-analogue converter is configured to receive from the demultiplexer (110) the samples associated with a respective one of the plurality of channels of audio data and to convert those samples from digital to analogue form, characterised by two-channel stereo derivation circuitry (130) configured to accept two-channel weighting information for each of the plurality of channels, wherein the two-channel stereo derivation circuity is further configured to derive two-channel stereo by weighting each of the plurality of channels of demultiplexer audio data with its associated two-channel weighting information, and wherein the two-channel derivation circuitry is configured to read the two-channel weighting information from the software carrier.

In accordance with another aspect of the present invention, there is provided A method for playing back recorded multi-channel digital audio signal samples, wherein each of the digital audio samples has been generated from one of a plurality of channels of audio data, and wherein at least three channels of the plurality of channels of audio data have been sampled at different rates, the method comprising demultiplexing each of the digital audio signal samples onto an appropriate one of a plurality of digital output channels, wherein each of the plurality of digital output channels is associated with a respective one of the plurality of channels of audio data, converting the demultiplexed digital audio signal samples on each of the plurality of digital output channels to a respective one of a first plurality of analogue output signals such that each of the first plurality of analogue output signals is provided on a respective one of a first plurality of analogue output channels, deriving from the demultiplexed digital audio signal samples a second plurality of analogue output signals based on weighting information, and ascertaining the weighting information from a software carrier, on which the multi-channel digital audio signal samples have been recorded, from which carrier the multichannel digital audio signals are played back.

In addition, the samples of the plurality of channels of audio data are preferably arranged on the software carrier in a single sequence in which the samples are in most nearly the order that they will be needed during playback. Methods and apparatus for playing back are also provided which access the multi-channel samples, taken at different rates for different channels and interleaved into a single stream as described above, and reconstruct the multi-channel analog audio information from those samples. In addition, the playback methods and apparatus may include deriving another version of the audio information from the information retrieved from the software carrier. For example, two-channel stereophonic audio signals may be derived from six-channel audio information retrieved from the software carrier, and various weighting factors may be used for combining information from various ones of the six channels to produce the signals for each of the two stereophonic channels.

Further features of the invention, its nature and various advantages will be more apparent from the accompanying drawings and the following detailed description of the preferred embodiments.

### Brief Description of the Drawings

FIG. 1 is a chart of the various data channels and corresponding resolutions;
FIG. 2 is a simplified elevational view of a preferred software carrier;
FIG. 3 is a chart showing a preferred order of recording samples on DVD-type six-channel recording media;
FIG. 4 is a simplified schematic block diagram of an illustrative playback circuit;
FIG. 5 is a simplified schematic block diagram of another illustrative playback circuit; and
FIG. 6 is a flowchart of a preferred method of recording and playback.

### Detailed Description of the Preferred Embodiments

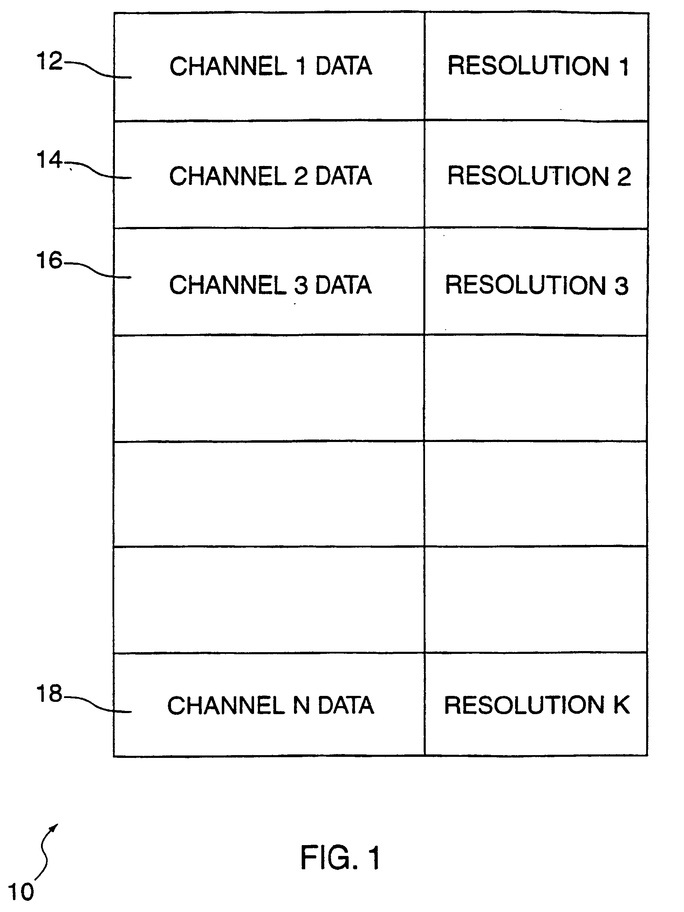

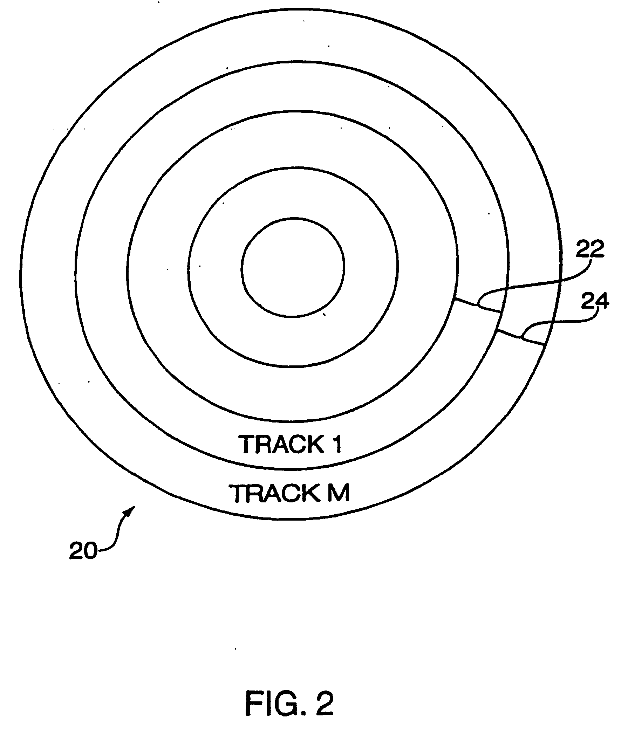

As shown in FIG. 1, N channels of audio data (represented by numbers 12, 14, 16, and 18, for example) are provided on a software carrier 10 (such as DVD disc 20 in FIG. 2). N may include one or more channels. For example when N = 8, there could be six channels for six-channel audio, as well as two channels for two-channel audio. Of course, there are many possible channel formats for providing audio programming on the software carrier. There can be any of K different resolutions used for the data in the various channels, where K is less than or equal to N. Each of the N channels can have its own resolution (in which case K equals N) or several channels can share the same resolution (in which case K is less than N).

There are two families of sampling rates commonly used at present in the recording industry. The first family includes rates of 48, 96, and 192 kHz. The second family includes rates of 44.1, 88.2, and 176.4 KHz. At present, the highest rates in each family (192 KHz and 176.4 KHz) are only supported in stereo, not in any other multichannel format. Both families can be used with bit depths of 16, 20 and 24 bits.

As shown in FIG. 1, different resolutions correspond to different sampling rates and/or different sample word lengths (i.e., a greater resolution means a greater sampling frequency and/or a longer sample word length).

As shown in FIG. 2, channels 1-N may be provided in multiple tracks on a software carrier such as a DVD disc 20. For example, track 1 (which may include channels 1-I (e.g., six channels for six-channel audio) is labeled 22, and track M (which may include channels J-N (e.g., two channels for two-channel audio) is labeled 24. Several channels are typically provided in a single stream in each track, so that M is less than N. For example, when N=8, I=6, and M=2, track 1 includes channels 1-6 and track 2 includes channels 7 and 8.

To enhance the listening experience beyond what is usually provided in conventional systems, the above-mentioned software carrier recording may have some of the channels sampled at a sampling rate greater than has heretofore conventionally been used. For example, in a six-channel audio system, the three front channels may be sampled at 88.2 KHz or 96 KHz, which is higher than the 44.1 or 48 KHz conventionally used as the highest sampling rate. The rear channels, which generally contain somewhat less important information, may be sampled at the more conventional 44.1 or 48 KHz sampling rate. The subwoofer channel, which contains only low frequency information and which therefore does not need a high sampling rate, may be sampled at 11.025 or 12 KHz. It is wasteful of space on the recording media to sample all six channels at 88.2 or 96 KHz when the rear and subwoofer channels do not significantly benefit from such high sampling rates.

The foregoing considerations lead to sampling the various channels to be recorded at different sampling rates. Sampling is generally performed using a sampler which includes a device such as an analog-to-digital ("A/D") converter.

At present, only a minority of consumers have multi-channel (e.g., six-channel) audio systems. Most consumers have only two-channel stereo audio systems. If recording media are provided with six-channels of audio recorded on them, it is desirable to have those media also playable in two-channel stereo audio systems. It is then further desirable to have playback apparatus for six-channel media which can optionally derive conventional two-channel stereo signals from the six channels of recorded information. In this way the six-channel recording media and the associated playback apparatus can be used in either six-channel or two-channel audio systems.

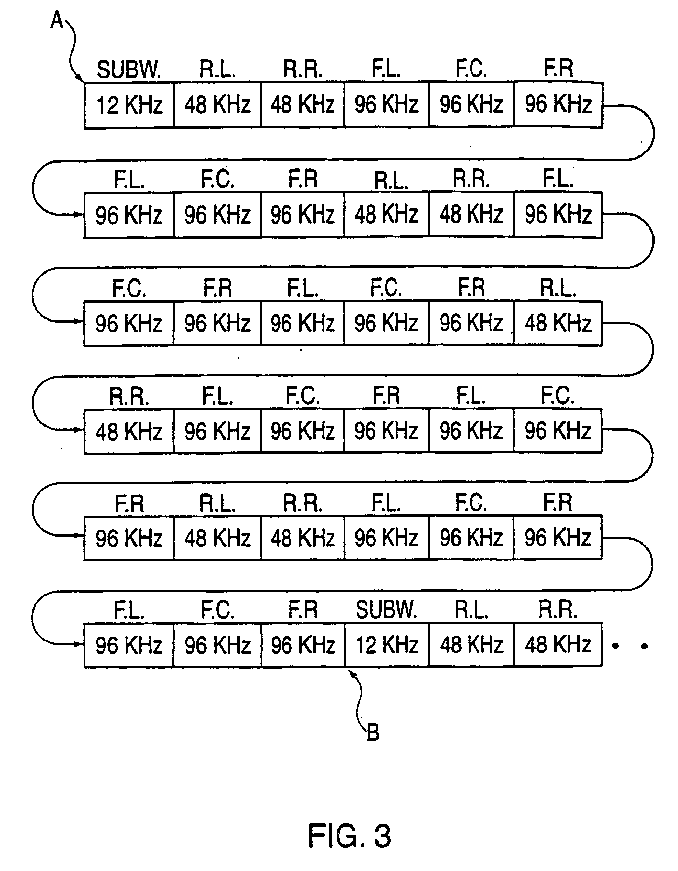

Assuming that the subwoofer channel ("SUBW.") is sampled at 12 KHz, that the rear left ("R.L.") and rear right ("R.R.") channels are sampled at 48 KHz, and that the front left ("F.L."), front center ("F.C."), and front right ("F.R.") channels are sampled at 96 KHz, FIG. 3 shows a preferred order of recording samples on DVD-type six-channel recording media. The samples between points A and B (points A and B define a frame, i.e., a distance or time interval between successive samples of the lowest frequency) are all taken from one time interval in the original information and include one 12 KHz subwoofer channel sample, four 48 KHz rear left samples, four 48 KHz rear right samples, eight 96 KHz front left samples, eight 96 KHz front center samples, and eight 96 KHz front right samples. The preferred recording order for these samples shown in FIG. 3 is such that the samples are read out one after another from left to right and from top to bottom as viewed in FIG. 3. Thus the recording order is preferably such that the first sample read out (at point A) is a lowest frequency sample. The next samples read out are intermediate frequency samples. The next samples read out are highest frequency samples. Then more intermediate frequency samples are read out, followed by more highest frequency samples. This pattern continues until it is time (at point B) to read out another of the lowest frequency samples, and then the whole pattern repeats again.

The above-described recording order (and consequent reading out order) provides samples from the recording media in most nearly the order in which they are needed by the playback circuitry (including the circuitry needed to derive two-channel stereo from six-channel recorded information). This will be more apparent from the following description of illustrative playback circuitry.

In the illustrative playback circuit 100 shown in FIG. 4 the samples read from the DVD-type disc are supplied one after another to the left-hand terminal of demultiplexer 110. Demultiplexer 110 switches each successive sample into the correct one of the six output channels of conversion unit 112. For example, each subwoofer channel sample is switched into the subwoofer channel which includes subwoofer channel digital-to-analog ("D/A") converter 120S. This D/A converter converts the samples it receives to an analog subwoofer channel output signal ("SUBW. OUT"). Similarly, demultiplexer 110 applies each rear left channel sample to rear left channel D/A converter 120RL which produces an analog rear left channel output signal ("R.L. OUT"). Each rear right channel sample is similarly applied to rear right channel D/A converter 120RR. And each of the front left, front center, front right channel samples are similarly applied to D/A converters 120FL, 120FC, and 120FR, respectively. Thus the top six outputs shown in the right in FIG. 4 are six analog signals for use in a six-channel audio system.

FIG. 4 also shows how the left and right two-channel stereo outputs may be derived from the six-channel signals. The left stereo output signal ("STEREO LEFT OUT") is produced by appropriately weighting each of the SUBW. OUT signal, the R.L. OUT signal, the F.L. OUT signal, and the F.C. OUT signal and combining the resulting signals. Operational amplifiers 130SL, 130RLL, 130FLL, and 130FCL are respectively used to weight these signals for combination to produce the STEREO LEFT OUT signal. Similarly, the right stereo output signal is produced by appropriately weighting each of the SUBW. OUT signal, the R.R. OUT signal, the F.C. OUT signal, and the F.R. OUT signal (using operational amplifiers 130SR, 130RRR, 130FCR, and 130FRR, respectively) and combining the resulting signals. The weighting factors (which may be provided on the software carrier or by user input) used by operational amplifiers 130 are supplied via leads 140.

FIG. 5 shows an alternative embodiment of conversion unit 112 of FIG. 4 in which the two-channel stereo signals are derived from the six-channel audio signals in the digital domain (rather than in the analog domain as is done in FIG. 4). In FIG. 5 elements 130 are digital multipliers for multiplying successive samples from demultiplexer 110 by various appropriate digital weighting factors supplied via leads 140. Elements 132L and 132R are digital adders for combining the multiplier 130 outputs that contribute to the left and right stereo channels, respectively. D/A converters 120SL and 120SR respectively convert the digital outputs of adders 132L and 132R to the analog left and right stereo output signals. In all other respects FIG. 5 is similar to FIG. 4. Note that in order for each adder 132 to receive something from each associated multiplier 130 during each operating cycle of the adder, some of the multipliers 130 may recycle and reuse the inputs they receive from demultiplexer 110 until the next new sample comes from demultiplexer 110 for that multiplier.

It will be apparent from studying FIGS. 3 and 4 together or FIGS. 3 and 5 together that the recording and consequent playback order for samples shown in FIG. 3 produces samples from the recording media in the order which comes closest to the order in which those samples are needed by the D/A converters 120 in the various channels in FIG. 4, or by the corresponding D/A converters 120 and digital components 130 and 132 in FIG. 5. This order of the samples therefore minimizes the amount of buffering needed in the various D/A converters and digital components to resynchronize the data across the various channels and to even out the rate of the samples in each channel.

It will be understood that the various sample rates mentioned above are only illustrative, and that different sample rates (e.g., 88.2, 44.1, and 11.025 KHz) can be used if desired. Similarly, the number of different sample rates can be different from three, and the number of channels sampled at each sample rate can be different from the number of channels sampled at each rate in the illustrative embodiment described above.

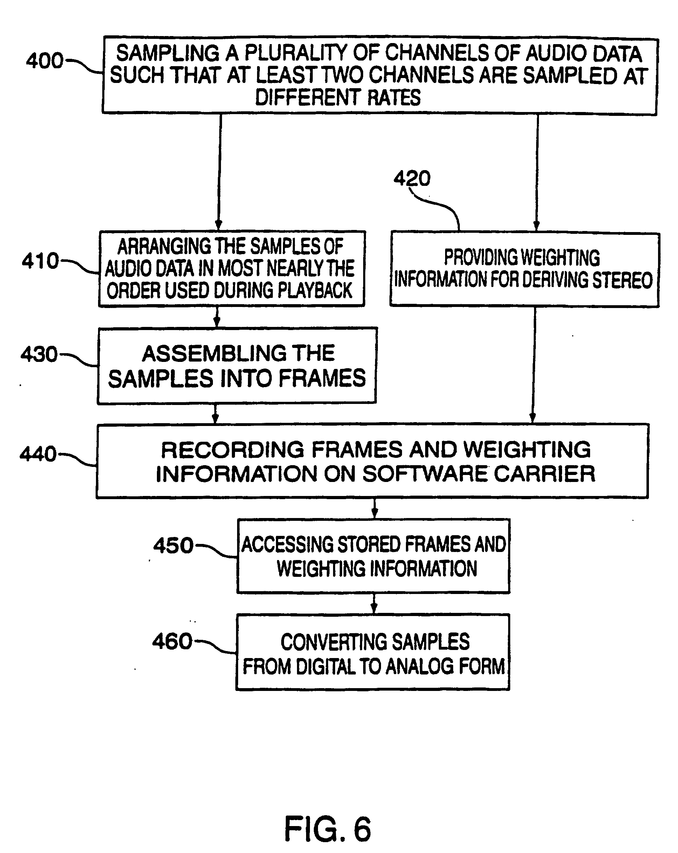

A flowchart illustrating a method for recording and playing back multi-channel digital audio signal samples taken at different sampling rates is provided in FIG. 6. A plurality of channels of audio data are sampled in step 400 such that at least two channels of the plurality of channels are sampled at different rates. The samples of the plurality of channels of audio data are arranged in step 410 in most nearly the order needed during playback. The samples of the plurality of channels of audio data are assembled in step 430 into frames. Weighting information for deriving stereo is optionally provided in step 420. The frames and weighting information are recorded in step 440 on the software carrier. The frames and weighting information stored on the software carrier are accessed in step 450. The samples of audio data are converted in step 460 from digital to analog form.

It will be understood that the foregoing is only illustrative of the principles of this invention, and that various modifications can be made by those skilled in the art without departing from the scope of the invention.

## Claims

1. A device for playing back recorded multi-channel digital audio signal samples, comprising:
a demultiplexer (110) configured to demultiplex digital audio signal samples associated with a plurality of channels of audio data read by the device from a software carrier (20) onto a respective plurality of digital output channels;
a first plurality of digital-to-analogue converters (FIGS. 4 and 5: 120S,120RL,120RR,120FL,120FC,120FR) coupled to respective output channels of the demultiplexer, wherein each digital-to-analogue converter is configured to receive from the demultiplexer (110) the samples associated with a respective one of the plurality of channels of audio data and to convert those samples from digital to analogue form;
**characterised by** two-channel stereo derivation circuitry (130) configured to accept two-channel weighting information for each of the plurality of channels, wherein the two-channel stereo derivation circuity is further configured to derive two-channel stereo by weighting each of the plurality of channels of demultiplexed audio data with its associated two-channel weighting information, and wherein the two-channel derivation circuitry is configured to read the two-channel weighting information from the software carrier.

2. The device of claim 1, wherein the two-channel stereo derivation circuitry includes a plurality of operational amplifiers (FIG 4: 130SL, 130SR, 130LL, 130RRR, 130FLL, 130FCL, 130FCR, 130FRR), wherein each operational amplifier has a first input lead coupled to an associated output of a respective one of the digital-to-analogue converters, and a second input lead (FIG 4: 140) configured to accept two-channel weighting information for a respective one of the channels of audio data, and wherein each operational amplifier is configured to weight the output of its associated digital-to-analogue converter applied on its first input lead with the two-channel weighting information applied on its second input lead, and wherein the two-channel stereo derivation circuitry is further configured to combine the associated outputs of the operational amplifiers in a first group (FIG 4: 130SR, 130RRR, 130FCR, 130FRR) to form the stereo-right output, and to additionally combine the associated outputs of the operational amplifiers in a second group (FIG 4: 130SL, 130RLL, 130FLL, 130FCL) to form the stereo-left output.

3. The device of claim 1, wherein the two-channel stereo derivation circuitry includes a plurality of digital multipliers (FIG 5: 130SL, 130RLL, 130FLL, 130FCL, 130SR, 130RRR, 130FCR, 130FRR), each digital multiplier having a first input lead coupled to an associated output of the demultiplexer and a second input lead (FIG 5: 140) on which two-channel weighting information for a respective one of the channels is provided, and wherein each digital multiplier is configured to multiply successive samples of a respective one of the plurality of channels of audio data by the two-channel weighting information associated with that channel, and wherein the two-channel stereo derivation circuitry further includes a first digital adder (FIG 5: 132R) configured to add the associated outputs of a first subplurality of digital multipliers (FIG 5: 130SL, 130RLL, 130FLL, 130FCL), and a second digital adder (FIG 5: 132R) configured to add the associated outputs of a second subplurality of digital multipliers (FIG 5: 130SR, 130RRR, 130FCR, 130FRR), and a pair of digital-to-analogue converters (FIG 5: 120SL, 120SR), wherein the output of the first digital adder is converted into an analogue stereo left signal by one of the digital-to-analogue converters in the pair, and wherein the output of the second digital adder is converted into an analogue stereo right signal by the other digital-to-analogue converter in the pair.

4. The device of claim 3, wherein each digital multiplier is further configured to reuse samples received on its first input lead from the demultiplexer until a new sample is provided on its first input lead by the demultiplexer.

5. The device of any one of the preceding claims, wherein at least three channels of said plurality of channels of audio data are sampled at different rates.

6. A method for playing back recorded multi-channel digital audio signal samples, wherein each of the digital audio samples has been generated from one of a plurality of channels of audio data, and wherein at least three channels of the plurality of channels of audio data have been sampled at different rates, the method comprising:
demultiplexing each of the digital audio signal samples onto an appropriate one of a plurality of digital output channels, wherein each of the plurality of digital output channels is associated with a respective one of the plurality of channels of audio data;
converting the demultiplexed digital audio signal samples on each of the plurality of digital output channels to a respective one of a first plurality of analogue output signals such that each of the first plurality of analogue output signals is provided on a respective one of a first plurality of analogue output channels;
deriving from the demultiplexed digital audio signal samples a second plurality of analogue output signals based on weighting information; and
ascertaining the weighting information from a software carrier, on which the multi-channel digital audio signal samples have been recorded, from which carrier the multichannel digital audio signals are played back.

7. The method of claim 6, wherein the weighting information includes a weighting factor for each of the plurality of channels of audio data.

8. The method of claim 7, wherein the deriving further comprises:
weighting each analogue output signal of a first group of the first plurality of analogue output signals with the weighting factor for the channel of audio data associated with that specific analogue output signal to provide a first group of weighted analogue signals;
combining each weighted analogue signal of the first group to provide a first analogue output signal of the second plurality of analogue output signals;
weighting each analogue output signal of a second group of the first plurality of analogue output signals with the weighting factor for the channel of audio data associated with that specific analogue output signal to provide a second group of weighted analogue signals; and
combining each weighted analogue signal of the second group to provide a second analogue output signal of the second plurality of analogue output signals.

9. The method of claim 7, wherein the deriving further comprises:
multiplying the digital audio signal samples on each of a first group of the plurality of digital output channels by the weighting factor for the channel of audio data associated with those specific digital audio signal samples to provide a first group of weighted digital signals;
summing the weighted digital signals of the first group to provide a first weighted digital output signal;
converting the first weighted digital output signal to a first analogue output signal of the second plurality of analogue output signals;
multiplying the digital audio signal samples on each of a second group of the plurality of digital output channels by the weighting factor for the channel of audio data associated with those specific digital audio signal samples to provide a second group of weighted digital signals;
summing the weighted digital signals of the second group to provide a second weighted digital output signal; and
converting the second weighted digital output signal to a second analogue output signal of the second plurality of analogue output signals.

10. The method of any one of claims 6 to 9, wherein the second plurality of analogue output signals is less in number than the first plurality of analogue output signals.

## Patentansprüche

1. Vorrichtung zur Wiedergabe aufgezeichneter digitaler Mehrkanal-Audiosignalabtastungen, umfassend:
- einen Demultiplexer (110) der konfiguriert ist zum Demultiplexen digitaler Audiosignalabtastungen, die einer Mehrzahl von Audiodatenkanälen zugeordnet sind, welche durch die Vorrichtung von einem Softwareträger (20) in eine jeweilige Vielzahl von digitalen Ausgangskanälen gelesen werden;
- eine erste Mehrzahl von Digital-zu-Analog-Wandlern (Fign. 4 und 5: 120S, 120RL, 120RR, 120FL, 120FC, 120FR) die an jeweilige Ausgangskanäle des Demultiplexers gekoppelt sind, wobei jeder Digital-zu-Analog-Wandler konfiguriert ist um von dem Demultiplexer (110) die Abtastungen zu empfangen, welche jeweils einem aus der Mehrzahl von Audiodatenkanälen zugeordnet sind und um diese Abtastungen von einer digitalen in eine analoge Form umzuwandeln;
- **gekennzeichnet durch** eine Zweikanal-Stereo-Ableitungsschaltungsanordnung (130), die konfiguriert ist um Zweikanal-Gewichtungsinformation für jeden aus der Mehrzahl von Kanälen anzunehmen, wobei die Zweikanal-Stereo-Ableitungsschaltungsanordnung ferner konfiguriert ist um Zweikanal-Stereo abzuleiten **durch** das Gewichten einer jeden aus der Mehrzahl von Kanälen von demultiplexten Audiodaten mit dessen zugeordneter Zweikanal-Gewichtungsinformation, und wobei die Zweikanal-Ableitungsschaltungsanordnung konfiguriert ist um die Zweikanal-Gewichtungsinformation von dem Softwareträger zu lesen.

2. Vorrichtung nach Anspruch 1, wobei die Zweikanal-Stereo-Ableitungsschaltungsanordnung eine Mehrzahl von Operationsverstärkern (Fig. 4: 130SL, 130SR, 130LL, 130RRR, 130FLL, 130FCL, 130FCR, 130FRR) umfasst, und wobei jeder Operationsverstärker einen ersten Eingangsanschluss besitzt, welcher an einem zugeordneten Ausgang einer jeweiligen der Digital-zu-Analog-Wandlern gekoppelt ist, und einen zweiten Eingangsanschluss (Fig. 4:140), der konfiguriert ist, um Zweikanal-Gewichtungsinformation anzunehmen für einen jeweiligen der Audiodatenkanäle, und wobei jeder Operationsverstärker konfiguriert ist um den Ausgang seines zugeordneten Digital-zu-Analog-Wandlers, der an seinem ersten Eingangsanschluss anliegt, zu gewichten mit der Zweikanal-Gewichtungsinformation, die an seinem zweiten Eingangsanschluss anliegt, und wobei die Zweikanal-Stereo-Ableitungsschaltungsanordnung ferner konfiguriert ist um die zugeordneten Ausgänge der Operationsverstärker in einer ersten Gruppe (Fig. 4: 130SR, 130RRR, 130FCR, 130FRR) zu verknüpfen um den rechten Stereoausgang zu bilden, und um zusätzlich die zugeordneten Ausgänge der Operationsverstärker in einer zweiten Gruppe (Fig. 4: 130SL, 130RLL, 130FLL, 130FCL) zu verknüpfen um den linken Stereoausgang zu bilden.

3. Vorrichtung nach Anspruch 1, wobei die Zweikanal-Stereo-Ableitungsschaltungsanordnung eine Mehrzahl von digitalen Multiplizierern (Fig. 5: 130SL, 130RLL, 130FLL, 130FCL, 130SR, 130RRR, 130FCR, 130FRR) umfasst, wobei jeder digitale Multiplizierer einen ersten Eingangsanschluss besitzt, der an einen zugeordneten Ausgang des Demultiplexers gekoppelt ist und einen zweiten Eingangsanschluss (Fig. 5: 140), an welchem Zweikanal-Gewichtungsinformation für einen jeweiligen der Kanäle bereitgestellt ist, und wobei jeder digitale Multiplizierer konfiguriert ist um aufeinanderfolgende Abtastungen einer jeweiligen aus der Mehrzahl von Audiodatenkanälen mit der diesem Kanal zugeordneten Zweikanal-Gewichtungsinformation zu multiplizieren, und wobei die Zweikanal-Stereo-Ableitungsschaltungsanordnung ferner umfasst einen ersten digitalen Addierer (Fig. 5: 132R), der konfiguriert ist um die zugeordneten Ausgänge einer ersten Teil-Mehrzahl von digitalen Multiplizierern (Fig. 5: 130SL, 130RLL, 130FLL, 130FCL), und einen zweiten digitalen Addierer (Fig. 5: 132R), der konfiguriert ist um die zugeordneten Ausgänge der zweiten Teil-Mehrzahl von digitalen Multiplizierern (Fig. 5: 130SR, 130RRR, 130FCR, 130FRR) zu addieren, und ein Paar von Digital-zu-Analog-Wandlern (Fig. 5: 120SL, 120SR), wobei der Ausgang des ersten digitalen Addierers in ein analoges, linkes Stereosignal umgewandelt wird durch einen der gepaarten Digital-zu-Analog-Wandler und wobei der Ausgang des zweiten digitalen Addierers in ein analoges, rechtes Stereosignal umgewandelt wird durch den anderen der gepaarten Digital-zu-Analog-Wandler.

4. Vorrichtung nach Anspruch 3, wobei jeder digitale Multiplizierer ferner konfiguriert ist zum Wiederverwenden von Abtastungen, die an seinem ersten Eingangsanschluss von dem Demultiplexer empfangen wurden bis eine neue Abtastung an seinem ersten Eingangsanschluss durch den Demultiplexer bereitgestellt ist.

5. Vorrichtung nach einem der vorstehenden Ansprüche, wobei wenigstens drei Kanäle der Mehrzahl von Audiodatenkanälen mit verschiedenen Abtastraten abgetastet werden.

6. Verfahren zur Wiedergabe von digitalen Multikanal-Audiosignal-Abtastungen, wobei jede der digitalen Audioabtastungen von einem von einer Mehrzahl von Audiodatenkanälen erzeugt wurden, und wobei wenigstens drei Kanäle der Mehrzahl von Audiodatenkanälen mit verschiedenen Abtastraten abgetastet wurden, wobei das Verfahren umfasst:
- Demultiplexen eines jeden der digitalen Audiosignalabtastungen auf einen geeigneten der Mehrzahl von digitalen Ausgangskanälen, wobei jeder der Mehrzahl von digitalen Ausgangskanälen einem jeweiligen aus der Mehrzahl von Audiodatenkanälen zugeordnet ist;
- Umwandlung der demultiplexten digitalen Audiosignal-Abtastungen auf jedem der Mehrzahl von digitalen Audiokanälen zu einem jeweiligen aus einer ersten Mehrzahl von analogen Ausgangssignale, sodass jedes der ersten Mehrzahl von analogen Ausgangssignalen auf einem jeweiligen aus einer ersten Mehrzahl von analogen Ausgangskanälen bereitgestellt ist;
- Ableiten von einer, auf Gewichtungsinformation basierenden zweiten Mehrzahl von analogen Ausgangssignalen von den demultiplexten digitalen Audiosignal-Abtastungen; und
- Feststellen der Gewichtungsinformation von einem Softwareträger, auf welchem die digitalen Multikanal-Audiosignalabtastungen aufgezeichnet wurden, von welchem Träger die digitalen Multikanal-Audiosignale wiedergegeben werden.

7. Verfahren nach Anspruch 6, wobei die Gewichtungsinformation einen Gewichtungsfaktor für jeden der Mehrzahl von Audiodatenkanälen umfasst.

8. Verfahren nach Anspruch 7, wobei das Ableiten ferner umfasst:
- Gewichten eines jeden analogen Ausgangssignals aus einer ersten Gruppe von der ersten Mehrzahl von analogen Ausgangssignalen mit dem Gewichtungsfaktor für den Audiodatenkanal, welcher diesem bestimmten analogen Ausgangssignal zugeordnet ist um eine erste Gruppe von gewichteten analogen Signalen bereitzustellen;
- Verknüpfen eines jeden gewichteten analogen Signals aus der ersten Gruppe um ein erstes analoges Ausgangssignal der zweiten Mehrzahl von analogen Ausgangssignalen bereitzustellen;
- Gewichten eines jeden analogen Ausgangssignals aus einer zweiten Gruppe der ersten Mehrzahl von analogen Ausgangssignalen mit dem Gewichtungsfaktor für den Audiodatenkanal, welcher diesem bestimmten analogen Ausgangssignal zugeordnet ist um eine zweite Gruppe von gewichteten analogen Ausgangssignalen bereitzustellen; und
- Verknüpfen eines jeden gewichteten analogen Signals der zweiten Gruppe um ein zweites analoges Ausgangssignal der zweiten Mehrzahl von analogen Ausgangssignalen bereitzustellen.

9. Verfahren nach Anspruch 7, wobei das Ableiten ferner umfasst:
- Multiplizieren der digitalen Audiosignal-Abtastungen auf jedem aus einer ersten Gruppe der Mehrzahl von digitalen Ausgangskanälen mit dem Gewichtungsfaktor für den Audiodatenkanal, welcher diesen bestimmten digitalen Audiosignalabtastungen zugeordnet sind um eine erste Gruppe von gewichteten digitalen Signalen bereitzustellen;
- Summieren der gewichteten digitalen Signale der ersten Gruppe um ein zweites gewichtetes digitales Ausgangssignal bereitzustellen;
- Umwandlung des ersten gewichteten digitalen Ausgangssignals zu einem ersten analogen Ausgangssignal der zweiten Mehrzahl von analogen Ausgangssignalen;
- Multiplizieren der digitalen Audiosignalabtastungen auf jedem aus einer zweiten Gruppe der Mehrzahl von digitalen Ausgangskanälen mit dem Gewichtungsfaktor für den Audiodatenkanal, welcher diesen bestimmten digitalen Audiosignalabtastungen zugeordnet sind um eine zweite Gruppe von gewichteten digitalen Signalen bereitzustellen:
- Summieren der gewichteten digitalen Signale der zweiten Gruppe um ein zweites gewichtetes digitales Ausgangssignal bereitzustellen; und
- Umwandlung des zweiten gewichteten digitalen Ausgangssignals zu einem zweiten analogen Ausgangssignal der zweiten Mehrzahl von analogen Ausgangssignalen.

10. Verfahren nach einem der Ansprüche 6 bis 9, wobei die Anzahl der zweiten Mehrzahl von analogen Ausgangssignalen kleiner ist als die Anzahl der ersten Mehrzahl von analogen Ausgangssignalen.

## Revendications

1. Dispositif pour relire des échantillons de signaux audio numériques à canaux multiples enregistrés, comprenant :
un démultiplexeur (110) configuré pour démultiplexer des échantillons de signaux audio numériques associés à une pluralité des canaux de données audio lues par le dispositif provenant d'un support de logiciel (20) sur une pluralité respective de canaux de sortie numérique ;
une première pluralité de convertisseurs de numérique en analogique (Figures 4 et 5 : 120S, 120RL, 120RR, 120FL, 120FC, 120FR) reliés à des canaux de sortie respectifs du démultiplexeur, où chaque convertisseur de numérique en analogique est configuré pour recevoir du démultiplexeur (110) les échantillons associés à un respectif de la pluralité de canaux de données audio et convertir ces échantillons de forme numérique en analogique ;
**caractérisé par** un ensemble de circuits de dérivation stéréo à deux canaux (130) configuré pour accepter l'information de pondération à deux canaux pour chacun de la pluralité de canaux, où l'ensemble de circuits de dérivation stéréo à deux canaux est en outre configuré pour obtenir la stéréo à deux canaux en pondérant chacun de la pluralité des canaux de démultiplexeur des données audio avec son information de pondération à deux canaux associée, et où l'ensemble de circuits de dérivation à deux canaux est configuré pour lire l'information de pondération à deux canaux à partir du support de logiciel.

2. Dispositif selon la revendication 1, dans lequel l'ensemble de circuits de dérivation stéréo à deux canaux comprend une pluralité d'amplificateurs opérationnels (Figure 4 : 130SL, 130SR, 130LL, 130RRR, 130FLL, 130FCL, 130FCR, 130FRR), où chaque amplificateur opérationnel a un premier fil d'entrée relié à une sortie associée d'un respectif des convertisseurs de numérique en analogique, et un deuxième fil d'entrée (Figure 4 : 140) configuré pour accepter l'information de pondération à deux canaux pour un respectif des canaux de données audio, et où chaque amplificateur opérationnel est configuré pour pondérer la sortie de son convertisseur de numérique en analogique associé appliqué sur son premier fil d'entrée avec l'information de pondération à deux canaux appliquée sur son deuxième fil d'entrée, et où l'ensemble de circuits de dérivation stéréo à deux canaux est en outre configuré pour combiner les sorties associées des amplificateurs opérationnels dans un premier groupe (Figure 4 : 130SR, 130RRR, 130FCR, 130FRR) pour former la sortie stéréo droite, et de plus combiner les sorties associées des amplificateurs opérationnels dans un deuxième groupe (Figure 4 : 130SL, 130RLL, 130FLL, 130FCL) pour former la sortie stéréo gauche.

3. Dispositif selon la revendication 1, dans lequel l'ensemble de circuits de dérivation stéréo à deux canaux comprend une pluralité de multiplicateurs numériques (Figure 5 : 130SL, 130RLL, 130FLL, 130FCL, 130SR, 130RRR, 130FCR, 130FRR), chaque multiplicateur numérique ayant un premier fil d'entrée relié à une sortie associée du démultiplexeur et un deuxième fil d'entrée (Figure. 5 : 140) sur lequel l'information de pondération à deux canaux pour un respectif des canaux est proposée, et où chaque multiplicateur numérique est configuré pour multiplier les échantillons successifs d'un respectif de la pluralité des canaux de données audio par l'information de pondération à deux canaux associée à ce canal, et où l'ensemble de circuits de dérivation stéréo à deux canaux comprend en outre un premier additionneur numérique (Figure 5 : 132R) configuré pour ajouter les sorties associées d'une première sous-pluralité de multiplicateurs numériques (Figure 5 : 130SL, 130RLL, 130FLL, 130FCL) et un deuxième additionneur numérique (Figure 5 : 132R) configuré pour ajouter les sorties associées d'une deuxième sous-pluralité de multiplicateurs numériques (Figure 5 : 130SR, 130RRR, 130FCR, 130FRR), et une paire de convertisseurs de numérique en analogique (Figure 5 : 120SL, 120SR), où la sortie du premier additionneur numérique est convertie en un signal stéréo gauche analogique par un des convertisseurs de numérique en analogique dans la paire, et où la sortie du deuxième additionneur numérique est convertie en un signal stéréo droit analogique par l'autre convertisseur de numérique en analogique dans la paire.

4. Dispositif selon la revendication 3, dans lequel chaque multiplicateur numérique est en outre configuré pour réutiliser des échantillons reçus sur son premier fil d'entrée provenant du démultiplexeur jusqu'à ce qu'un nouvel échantillon soit proposé sur son premier fil d'entrée par le démultiplexeur.

5. Dispositif selon l'une quelconque des revendications précédentes, où au moins trois canaux de ladite pluralité de canaux de données audio sont échantillonnés à des fréquences différentes.

6. Procédé pour relire des échantillons de signaux audio numériques à canaux multiples enregistrés, dans lequel chacun des échantillons audio numériques a été généré à partir d'une pluralité de canaux de données audio, et dans lequel au moins trois canaux de la pluralité des canaux de données audio ont été échantillonnés à des fréquences différentes, le procédé comprenant :
le démultiplexage de chacun des échantillons de signaux audio numériques sur un approprié d'une pluralité de canaux de sortie numérique, où chacun de la pluralité de canaux de sortie numérique est associé à un respectif de la pluralité des canaux de données audio ;
la conversion des échantillons de signaux audio numériques démultiplexés sur chacun de la pluralité de canaux de sortie numérique en un respectif d'une première pluralité de signaux de sortie analogiques tels que chacun de la première pluralité de signaux de sortie analogiques est proposé sur un respectif d'une première pluralité de canaux de sortie analogiques ;
l'obtention à partir des échantillons de signaux audio numériques démultiplexés d'une deuxième pluralité de signaux de sortie analogiques basés sur l'information de pondération ; et
la vérification de l'information de pondération à partir d'un support de logiciel, sur lequel les échantillons de signaux audio numériques à canaux multiples ont été enregistrés, support à partir duquel les signaux audio numériques à canaux multiples sont lus.

7. Procédé selon la revendication 6, dans lequel l'information de pondération comprend un facteur de pondération pour chacun de la pluralité des canaux de données audio.

8. Procédé selon la revendication 7, dans lequel l'obtention comprend en outre :
la pondération de chaque signal de sortie analogique d'un premier groupe de la première pluralité de signaux de sortie analogiques avec le facteur de pondération pour le canal de données audio associé à ce signal de sortie analogique spécifique pour proposer un premier groupe de signaux analogiques pondérés ;
la combinaison de chaque signal analogique pondéré du premier groupe pour proposer un premier signal de sortie analogique de la deuxième pluralité de signaux de sortie analogiques ;
la pondération de chaque signal de sortie analogique d'un deuxième groupe de la première pluralité de signaux de sortie analogiques avec le facteur de pondération pour le canal de données audio associé à ce signal de sortie analogique spécifique pour proposer un deuxième groupe de signaux analogiques pondérés ; et
la combinaison de chaque signal analogique pondéré du deuxième groupe pour proposer un deuxième signal de sortie analogique de la deuxième pluralité de signaux de sortie analogiques.

9. Procédé selon la revendication 7, dans lequel la dérivation comprend en outre :
la multiplication des échantillons de signaux audio numériques sur chacun d'un premier groupe de la pluralité de canaux de sortie numérique par le facteur de pondération pour le canal de données audio associées à ces échantillons de signaux audio numériques spécifiques pour proposer un premier groupe de signaux numériques pondérés ;
l'addition des signaux numériques pondérés du premier groups à proposer un premier signal de sortie numérique pondéré ;
la conversion du premier signal de sortie numérique pondéré en un premier signal de sortie analogique de la deuxième pluralité de signaux de sortie analogiques ;
la multiplication des échantillons de signaux audio numériques sur chacun d'un deuxième groupe de la pluralité de canaux de sortie numérique par le facteur de pondération pour le canal de données audio associées à ces échantillons de signaux audio numériques spécifiques pour proposer un deuxième groupe de signaux numériques pondérés ;
l'addition des signaux numériques pondérés du deuxième groupe pour proposer un deuxième signal de sortie numérique pondéré ; et
la conversion du deuxième signal de sortie numérique pondéré en un deuxième signal de sortie analogique de la deuxième pluralité de signaux de sortie analogiques.

10. Procédé selon l'une quelconque des revendications 6 à 9, dans lequel la deuxième pluralité de signaux de sortie analogiques est inférieure en nombre à la première pluralité de signaux de sortie analogiques.
